# EUROPÄISCHE PATENTSCHRIFT

(11) **EP 3 252 451 B1**
(45) Veröffentlichungstag und Bekanntmachung des Hinweises auf die Patenterteilung: **05.09.2018**
(21) Anmeldenummer: 16172965.2
(22) Anmeldetag: 03.06.2016
(51) Int. Cl.: G01M 5/00

(54) **VERFAHREN ZUR FESTIGKEITSPRÜFUNG**
METHOD FOR TESTING RESISTANCE
PROCEDE DE CONTROLE DE RESISTANCE

(43) Veröffentlichungstag der Anmeldung: 06.12.2017
(73) Patentinhaber: Roch Technology GmbH, 23569 Lübeck (DE)
(72) Erfinder:
(74) Vertreter: Patentanwälte Vollmann & Hemmer

(56) Entgegenhaltungen:
- EP-B1- 0 953 147
- EP-B1- 1 473 557

## Beschreibung

Die Erfindung betrifft ein Verfahren zur Festigkeitsprüfung von bodenseitig verankerten Masten, bei denen der Mast oberhalb seiner Verankerungsstelle mit einer konstanten Geschwindigkeit in einer Querrichtung zu seiner Längsachse ausgelenkt und dabei die Kraft in Abhängigkeit der Zeit registriert und zur Auswertung der Festigkeit des Mastes herangezogen wird.

Aus EP 0 638 794 B1 zählt es zum Stand der Technik, einen zu prüfenden Mast oberhalb seiner Verankerung mit ansteigender Kraft zu belasten, wobei sowohl die aufzuwendende Kraft als auch die sich dadurch ergebende Auslenkung des Mastes im Bereich zwischen der Krafteinleitungsstelle und dem Boden erfasst wird und dann nach den Grundsetzen der Festigkeitslehre die Festigkeit des Mastes bestimmt wird. Diese Prüfmethode hat sich grundsätzlich bewährt, hat jedoch den Nachteil, dass sie zum einen sowohl einen Kraftsensor als auch einen Wegsensor benötigt, zum anderen können mit dieser Anordnung Schäden im Bereich zwischen Wegaufnehmer und Krafteinleitungsstelle nicht ermittelt werden. Auch ist dieses Verfahren nicht geeignet, bei Ermittlung eines Fehlers zu spezifizieren, um welche Art von Fehler es sich handelt.

Aus EP 0 894 250 B1 ist ein insoweit weiterentwickeltes Verfahren bekannt, bei dem nacheinander folgend Zug- und Druckkräfte in den Mast eingeleitet werden und durch Vergleich der sich dabei jeweils ergebenden Belastungskennlinien, das heißt insbesondere der Steigung des jeweiligen Kraft/Weg-Diagrammes, ermittelt wird, ob der Mast einen Riss hat oder nicht.

Aus EP 0 943 079 B1 zählt es zum Stand der Technik, nicht nur das sich ergebende Kraft/Weg-Diagramm bei Belastung, sondern auch bei Entlastung, das heißt bei Rückstellung des Mastes, auszuwerten. Hierdurch können etwaige Schäden des Mastes oder seiner Verankerung genauer spezifiziert werden, insbesondere erlaubt dieses Verfahren Aussagen über die Verankerung des Mastes zu treffen.

Eine noch differenziertere Aussage über die Verankerung des Mastes im Boden ist durch ein Prüfverfahren gegeben, wie es aus EP 0 953 147 B1 zum Stand der Technik zählt. Hier erfolgt die Belastung in zwei Stufen. Es wird dabei zunächst eine Grundlast aufgebracht, dann bis zur maximalen Prüfkraft erhöht und bis zu dieser Grundkraft entlastet, wobei die Auslenkung bei Erreichen dieser Grundkraft verglichen wird.

All den vorgenannten Prüfverfahren gemein ist, dass neben der aufzubringenden Kraft auch der Weg zu messen ist. Dies ist zum einen aufwendig, da ein solcher Wegaufnehmer mittels eines Stativs an geeigneter Stelle an den Mast heranzuführen ist und andererseits problematisch, wenn sich nämlich beim Einleiten der Prüfkraft nicht nur der Mast sondern auch das Fundament mit dem umgebenden Boden und somit der darauf stehende Messaufnehmer mit bewegt. Diese Einflüsse können bei der Wegmessung nicht erfasst werden.

Insoweit günstiger ist das aus EP 1 473 557 B1 bekannte Verfahren, bei welchem zum Prüfen eines bodenseitig verankerten Mastes dieser mittels eines Linearantriebs mit gleichförmiger Geschwindigkeit ausgelenkt und dabei die zeitliche Änderung der Kraft bestimmt, angezeigt und ausgewertet wird.

Dieses Festigkeitsprüfverfahren kommt zwar ohne einen Wegaufnehmer aus, ist jedoch insoweit von Nachteil, als die sich bei Rückstellung, das heißt bei Entlastung des Mastes, möglicherweise ergebenden Wegdifferenzen nicht erfassbar sind. Das Verfahren ist daher hinsichtlich der Differenzierung der damit detektierbaren plastischen Verformung nicht geeignet.

Ausgehend von diesem Stand der Technik liegt der vorliegenden Erfindung die Aufgabe zugrunde, ein gattungsgemäßes Verfahren zur Festigkeitsprüfung von bodenseitig verankerten Masten hinsichtlich der Fehlerdifferenzierung zu verbessern, ohne den Messaufwand zu erhöhen. In Weiterbildung des erfindungsgemäßen Verfahrens soll dann gegebenenfalls auch unter Inkaufnahme eines erhöhten Messaufwandes die Fehlerdiagnose an sich verbessert werden.

Diese Aufgabe wird gemäß der Erfindung durch ein Verfahren mit den in Anspruch 1 angegebenen Merkmalen gelöst. Vorteilhafte Ausgestaltungen der Erfindung ergeben sich aus den Unteransprüchen, der nachfolgenden Beschreibung und der Zeichnung.

Bei dem erfindungsgemäßen Verfahren zur Festigkeitsprüfung von bodenseitig verankerten Masten wird der Mast oberhalb seiner Verankerungsstelle mit einer konstanten Geschwindigkeit in einer Querrichtung zu seiner Längsachse ausgelenkt und dabei die Kraft in Abhängigkeit der Zeit registriert, das heißt erfasst und gespeichert. Die Kraft in Abhängigkeit der Zeit wird dabei zur Auswertung der Festigkeit des Mastes herangezogen. Gemäß der Erfindung wird der Mast nicht nur bei der Belastung, sondern auch bei der Entlastung mit konstanter Geschwindigkeit und zwar in Gegenrichtung rückgelenkt und dabei ebenfalls die Kraft in Abhängigkeit der Zeit registriert. Durch einen Vergleich der Belastungskräfte mit den Entlastungskräften jeweils in Abhängigkeit der Zeit erfolgt die Auswertung zur Bestimmung der Festigkeit des Mastes bzw. seiner Verankerung.

Grundgedanke des erfindungsgemäßen Verfahrens ist es, den bodenseitig verankerten Mast oberhalb seiner Verankerungsstelle mit einer konstanten Geschwindigkeit in Querrichtung zu seiner Längsachse zunächst auszulenken und nachfolgend mit dieser konstanten Geschwindigkeit in Gegenrichtung rückzulenken, bis der Ausgangspunkt wieder erreicht ist. Dabei werden sowohl bei der Belastungs- als auch bei der Entlastungsprozedur die Kräfte in ihrem zeitlichen Verlauf erfasst, so dass sich für die Belastung eine Kurve ansteigender Kraft in Abhängigkeit der Zeit und für die Entlastung eine Kurve abfallender Kraft in Abhängigkeit der Zeit ergibt. Es versteht sich, dass mit ersterer Kurve all die Auswertungen möglich sind, die aus EP 1 473 557 B1 bekannt sind, wobei jedoch darüber hinaus durch Vergleich mit der Entlastungskurve wesentlich differenziertere Aussagen über einen Schaden am Mast oder dessen Fundament getroffen werden können. Dabei unterscheidet sich das erfindungsgemäße Verfahren wesentlich vom Stand der Technik dadurch, dass nicht eine "Entlastungskennlinie" aufgenommen wird, sondern dass der Mast gezielt mit konstanter Geschwindigkeit entlastet wird. Eine solch gezielt gesteuerte Entlastung, bei der der Linearantrieb mit konstanter Geschwindigkeit in Entlastungsrichtung angesteuert wird, ist völlig neu, da alle bisher bekannten Verfahren für den Entlastungsfall ausschließlich die Rückstellkräfte des Mastes verwenden, also keine aktive Ansteuerung vorsehen.

Grundsätzlich können Einzelwerte der Belastungs- und Entlastungskräfte herangezogen werden, um Aussagen über die Festigkeit des Mastes und seiner Verankerung zu treffen. Besonders vorteilhaft ist es jedoch, wenn die Kurvenverläufe der Belastungskräfte und die der Entlastungskräfte verglichen und zur Auswertung herangezogen werden. Solche Kurvenverläufe können mathematisch erfasst und ausgewertet werden, beispielsweise durch Ermittlung von Steigungen in bestimmten Bereichen der Kurven durch Differenzieren oder durch Integrieren, das heißt durch Erfassen der Fläche unter einer Kurve oder eines Teils der Kurve.

Dabei kann es von Vorteil sein, die Flächen unter den Kurvenverläufen der Belastungskräfte mit denen der Entlastungskräfte zu vergleichen und zur Auswertung heranzuziehen. Diese Flächen können durch Integration oder geeignete mathematische Näherungsverfahren mit vergleichsweise geringem Rechenaufwand erfasst werden, die entsprechend ermittelten Werte benötigen geringen Speicherplatz und können gegebenenfalls mit geringem Rechenaufwand weiter verarbeitet werden.

Gemäß einer Weiterbildung des erfindungsgemäßen Verfahrens werden lineare Kurvenverläufe der Belastung und der Entlastung verglichen, das heißt typischerweise der lineare Kurvenverlauf von null ausgehend ansteigend bei Belastung und bei Entlastung abfallend auf null. Im Idealfall sollten diese Kurven spiegelbildlich, das heißt gespiegelt an einer senkrecht zur Zeitachse stehenden Achse übereinstimmen. Wenn diese jedoch in der Steigung unterschiedlich sind, so kann gemäß der Erfindung hier auf eine Rissbildung geschlossen werden.

In Weiterbildung des erfindungsgemäßen Verfahrens kann bei nicht linearen Kurvenverläufen von Belastungs- und Entlastungskurve auf eine plastische Verformung des Mastes oder eine Bewegung des Mastes im Boden geschlossen werden.

Eine plastische Verformung des Mastes oder eine Bewegung des Mastes im Boden kann jedoch gemäß der Erfindung auch dadurch ermittelt werden, dass die Flächen unter den Kurvenverläufen von Belastungskurve und Entlastungskurve ermittelt, miteinander verglichen und als unterschiedlich groß festgestellt werden.

Gemäß einer vorteilhaften Weiterbildung des erfindungsgemäßen Verfahrens wird nach erfolgter Belastung des Mastes in Querrichtung und nachfolgender Entlastung des Mastes in Gegenrichtung, jeweils mit konstanter Geschwindigkeit, dann eine Belastung des Mastes in Gegenrichtung mit konstanter Geschwindigkeit und nachfolgend eine Entlastung des Mastes mit konstanter Geschwindigkeit in umgekehrter Richtung dazu erzeugt, wobei jeweils die Kraft in Abhängigkeit der Zeit registriert wird. Eine solche weitere Messwerterfassung ist in der Praxis besonders einfach, da die Prüfvorrichtung hierzu nicht erneut verfahren werden muss, sondern lediglich ein zusätzlicher Prüfzyklus in anderer Richtung (in Gegenrichtung) zu fahren ist.

Das erfindungsgemäße Verfahren sieht weiter vor, durch Vergleich der Belastungskurvenverläufe in beiden Richtungen zu ermitteln, ob es sich um eine plastische Verformung des Mastes oder eine Bewegung des Mastes im Boden handelt. Es kann also durch diesen weiteren Prüfzyklus, der zeitmäßig vernachlässigbar ist, da die Prüfvorrichtung hierzu nicht in ihrer Position verändert werden muss, eine zuverlässige Aussage darüber erhalten werden, ob der ermittelte Fehler im Mast selbst oder in seiner Verankerung liegt.

Gemäß der Erfindung kann bei einem anfänglichen nicht linearen Kurvenverlauf der Belastungskurve in Gegenrichtung darauf geschlossen werden, dass es sich um eine Bewegung des Mastes im Boden handelt und nicht um eine plastische Verformung des Mastes. Dieser anfängliche nicht lineare Kurvenverlauf der Belastungskurve in Gegenrichtung erlaubt somit gemäß der Erfindung einen Fehler in der Verankerung des Mastes festzustellen.

Das erfindungsgemäße Verfahren erlaubt jedoch nicht nur einen Fehler in der Verankerung des Mastes im Boden festzustellen, sondern auch eine Verformung des Mastes, nämlich dann, wenn der anfängliche Kurvenverlauf der Belastungskurve in Gegenrichtung linear verläuft.

In Weiterbildung des erfindungsgemäßen Verfahrens werden die Flächen unter den Kurvenverläufen jeweils von Belastung und Entlastung verglichen, wobei dann, wenn die Flächen unter den Belastungskurven größer als die entsprechenden Flächen unter den Entlastungskurven sind und die Belastungskurven zumindest in ihren anfänglichen Bereichen nicht linear verlaufen, auf einen Schaden der Fundamentierung des Mastes, insbesondere der Bewegung des Mastes im Boden geschlossen wird. Umgekehrt kann mit diesem Verfahren, wenn die Flächen unter den Kurvenverläufen jeweils von Belastung und Entlastung vergleichen werden, dann, wenn die Flächen unter den Belastungskurven größer als die entsprechenden Flächen unter den Entlastungskurven sind und die Belastungskurven zumindest in ihren anfänglichen Bereichen linear verlaufen, auf eine plastische Verformung des Mastes geschlossen werden.

Das erfindungsgemäße Verfahren wird vorteilhaft in zeitlichen Abständen mit gleicher Belastungs- und Entlastungsgeschwindigkeit wiederholt, wobei die Veränderung der Steigung der Belastungskurve und/oder der Entlastungskurve, vorzugsweise im Nullpunkt als Maß für die Lebensdauer des Mastes/ der Verankerung des Mastes, insbesondere der Fortschreitung eines Risses/Schadens, dienen. Ein solcher zeitlicher Abstand kann von mehreren Monaten bis zu wenigen Jahren liegen, vorzugsweise etwa im Bereich eines Jahres. Wenn die entsprechenden Werte in einem Diagramm aufgetragen werden, ergibt sich typischerweise eine Kurve, deren Anstieg zunächst flach und dann fortlaufend immer steiler wird. Je steiler die Kurve wird, desto höher ist die Ausfallswahrscheinlichkeit durch eine Schaden, es kann also durch geeignete statistische Bewertung sichergestellt werden, dass auch bei nur wenigen wiederholten Festigkeitsprüfungen die Lebensdauer des Mastes bzw. seiner Verankerung vergleichsweise genau abgeschätzt werden kann, so dass rechtzeitig vorher geeignete Maßnahmen zum Austausch oder zur Reparatur der Verankerung (des Fundamentes) eingeleitet werden können.

Dabei ist insbesondere die Steigung der Belastungskurve und die der Entlastungskurve besonders gut geeignet, die Fortschreitung einer Rissbildung zu erfassen. Ganz allgemein können jedoch durch Vergleich von Belastungs- und Entlastungskurven in zeitlichen Abständen Veränderungen und deren Auswirkungen auf die zu erwartende Lebensdauer des Mastes oder seiner Verankerung ermittelt werden.

Das erfindungsgemäße Verfahren ist besonders vorteilhaft, da es ausschließlich mit einem Kraftaufnehmer auskommt, der zwischen Prüfungsvorrichtung und Mast in an sich bekannter Weise in Form einer Kraftmessdose eingegliedert werden kann. Es kann jedoch zusätzlich, gemäß einer Weiterbildung des erfindungsgemäßen Verfahrens, ein Wegaufnehmer am Mast angeordnet und damit gleichzeitig die Auslenkung des Mastes in Abhängigkeit der Kraft ermittelt werden. Mit einem solchen Wegaufnehmer, der vorzugsweise unterhalb der Mastklappe angeordnet wird, die typischerweise den schwächsten Bereich des Mastes darstellt, wird zwar der vorrichtungsmäßige Aufwand erhöht, es ergeben sich jedoch dadurch weitere Differenzierungsmöglichkeiten bei der Schadensermittlung des Mastes, wie dies bei bekannten Vorrichtungen nicht der Fall ist. Durch diese zusätzliche Anordnung des Wegaufnehmers kann festgestellt werden, ob sich die Fehlstelle im Mast unterhalb des Wegaufnehmers oder im Bereich zwischen Wegaufnehmer und Krafteinleitungsstelle befindet. Wenn nämlich quasi gleiche Kurven bei Ermittlung des Weges durch den Wegaufnehmer und bei Ermittlung der Kraft durch den Kraftaufnehmer ermittelt werden, dann ist davon auszugehen, dass sich die Schadstelle unterhalb des Wegaufnehmers befindet, werden hingegen nur vom Kraftaufnehmer Unregelmäßigkeiten und nicht vom Wegaufnehmer ermittelt, so befindet sich die Schadstelle zwischen der Krafteinleitungsstelle und dem Wegaufnehmer. Eine Eingrenzung der Schadensstelle kann durch Variation der höhenmäßigen Anordnung des Wegaufnehmers erfolgen.

Es zählt zum Stand der Technik, einen Mast nicht direkt im Erdreich zu verankern, sondern den Mast in einer Bodenplatte enden zu lassen, und diese Bodenplatten über Schrauben mit dem Fundament zu befestigen. Bei einer solchen Anordnung kann es durch Bewegung im Fundament oder bei ungenügender Vorspannung der Schraubverbindung passieren, dass sich eine oder mehrere Schraubverbindungen zu lösen beginnen. Auch dies kann mit dem erfindungsgemäßen Prüfverfahren detektiert werden, in dem anhand der Belastungs-/ und/oder Entlastungskurve dies festgestellt wird, wenn nämlich die Belastungskurve einen anfänglichen flachen und dann steilen Kurvenabschnitt aufweist und/oder die Entlastungskurve am Ende einen flachen Kurvenabschnitt. Dieser flache Kurvenabschnitt am Anfang der Belastungskurve bzw. am Ende der Entlastungskurve kennzeichnet das quasi kraftfreie Kippen des Mastes, um das durch die Schraubverbindung gebildete Spiel. Dabei ist je nach Spreizung der Belastungs-/Entlastungskurve dieser flache Kurvenabschnitt der Belastungskurve bzw. der Entlastungskurve deutlich von den sich sonst im Belastungs-/Entlastungsbereich ergebenden Kurvensteilheiten zu unterscheiden. Typischerweise weist der anfängliche flache Kurvenabschnitt eine Steigung auf, die um ein vielfaches kleiner ist als der sich daran anschließende steilere Kurvenabschnitt der Belastungskurve. Die Steigung des flachen Teils am Ende der Entlastungskurve ist dabei maximal halb so groß wie die Steigung im übrigen Bereich der Entlastungskurve, jeweils betrachtet für den Winkel unter der Kurve.

Die Erfindung ist nachfolgend anhand von Ausführungsbeispielen näher erläutert. Es zeigen:
- Fig. 1: in schematischer Darstellung eine Vorrichtung zur Ausführung des erfindungsgemäßen Prüfverfahrens an einem stehend verankerten Mast, und
- Fig. 2 - 19: Belastungs- und Entlastungskurven bei der Festigkeitsprüfung eines im Boden verankerten Mastes.

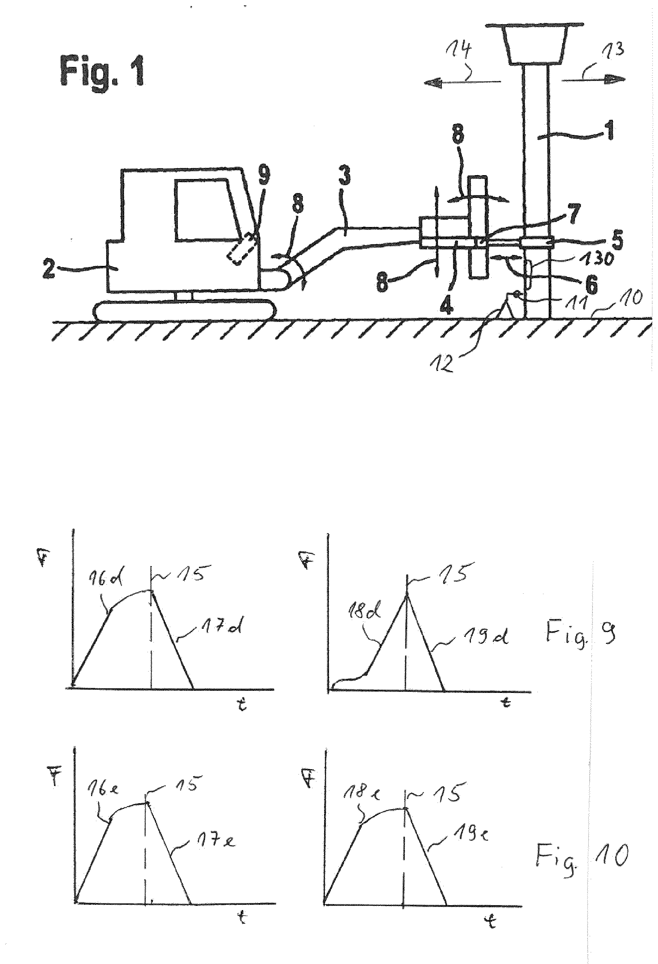

Zur Durchführung des erfindungsgemäßen Festigkeitsprüfverfahrens von bodenseitig verankerten Masten wird typischerweise ein bodenstehendes, gegebenenfalls zusätzlich abgestütztes Fahrzeug, in der Darstellung gemäß Fig. 1 ein Raupenfahrzeug 2 mit einem Ausleger 3 verwendet, an dem im vorderen Teil ein Linearantrieb 4 angeordnet ist, mit dem eine Kraft auf den Mast 1 aufgebracht werden kann. Zu diesem Zweck ist der Mast 1 mit einer Schelle 5 umgeben, so dass mit dem Linearantrieb 4 sowohl eine Druckkraft als auch eine Zugkraft ausgeübt werden kann. Diese Kraft bzw. Bewegungen des Linearantriebes sind durch den Doppelpfeil 6 angedeutet. Zwischen dem Linearantrieb 4 und der Schelle 5 ist ein Kraftsensor 7 in Form einer Kraftmessdose angeordnet. Der Ausleger 3 bzw. die Anordnung am Ende des Auslegers kann in Richtung der Doppelpfeile 8 verschwenkt bzw. angehoben oder abgesenkt werden, um so die Prüfanordnung an eine gewünschte Stelle des Mastes bringen zu können und Messungen an unterschiedlichen Stellen des Mastes vornehmen zu können. Mit 9 ist eine Registrier-Anzeige- und Auswerteinrichtung angedeutet, welche die erfassten Messwerte, insbesondere die von Kraftsensor 7 abgegebenen Werte in Abhängigkeit der Zeit registriert und ausgewertet werden können.

Wenn, was weiter unten noch beschrieben ist, nicht nur die Kraft durch den Kraftaufnehmer 7, sondern auch der Weg, das heißt die Auslenkung des Mastes im Bereich zwischen dem Boden 10 und der Schelle 5, dort wo die Kraft aufgebracht wird, erfasst werden soll, dann ist ein gesonderter Wegaufnehmer 11 vorzusehen, der zweckmäßigerweise mittels eines externen Statives 12 neben dem Mast 1 angeordnet wird, vorzugsweise derart, dass die Wegerfassung unterhalb einer Mastklappe 130 erfolgt, welche üblicherweise die schwächste Stelle des Mastes darstellt.

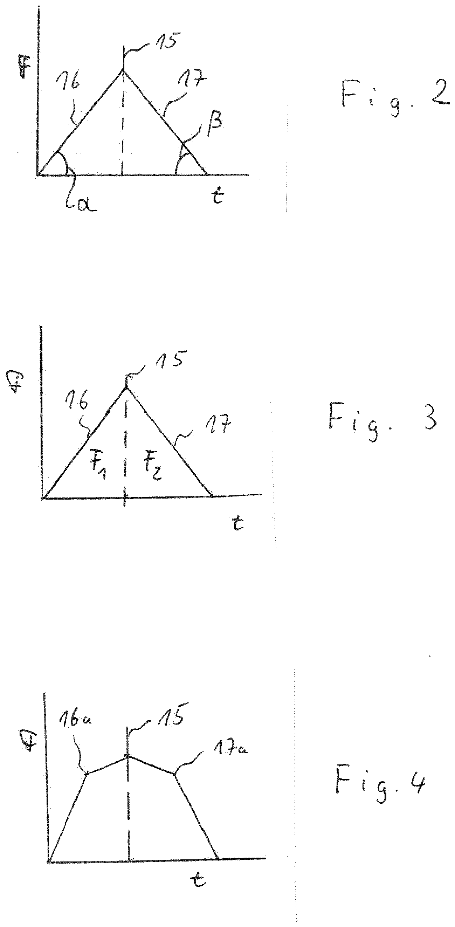

In einfachster Form erfolgt das erfindungsgemäße Verfahren der Gestalt, dass mittels des Linearantriebs 7 der Mast 1 im Bereich der Schelle 5 mit konstanter Geschwindigkeit in eine Richtung 13 ausgelenkt wird, und zwar so lange, bis eine zuvor ermittelte und als Belastung zulässige maximale Prüfkraft erreicht worden ist. Während dieser Zeit wird die von der Prüfeinrichtung auf den Mast aufgebrachte Kraft in Abhängigkeit der Zeit registriert. Sodann erfolgt eine Umsteuerung des Linearantriebs, wonach der Linearantrieb in Gegenrichtung 14, also in Endlastungsrichtung mit konstanter Geschwindelt so lange angesteuert wird, bis die Kraft den Wert null erreicht. Auch bei dieser Rückbewegung wird die Kraft in Abhängigkeit der Zeit aufgezeichnet. Es stehen somit zwei Kurven zur Verfügung, wie sie beispielhaft in Fig. 2 dargestellt sind.

Die anhand der Fig. 2 dargestellten Kurven kennzeichnen einen im Boden verankerten Mast 1, der zunächst mit konstanter Geschwindigkeit in Richtung 13 ausgelenkt wird, und zwar so lange, bis die zuvor ermittelte maximal zulässige Prüfkraft erreicht ist. Sodann erfolgt eine Umsteuerung und eine Entlastung mit konstanter Geschwindigkeit in Gegenrichtung 14. Die sich dabei ergebenden Kurven 16, 17 gemäß den Fig. 2 und 3 kennzeichnen einen Mast, bei dem sowohl die Verankerung im Boden als auch der Mast selbst bestimmungsgemäß ist, das heißt, dass die Prüfkraft ausschließlich zur elastischen Verformungen führt. Die Auswertung der Kurven 16, 17 kann, wie Fig. 2 beispielhaft verdeutlicht, durch Spiegelung an einer senkrechten Achse 15 zwischen den Kurven 16, 17 erfolgen, wobei dann, wenn die gespiegelten Kurven 16, 17 übereinstimmen, das zuvor beschriebene bestimmungsgemäße Ergebnis festgestellt wird. Statt den vollständigen Kurvenverlauf zu vergleichen genügt es, den Steigungswinkel a der Belastungskurve 16 mit dem Winkel β unter der Entlastungskurve 17 zu vergleichen. Sind diese betragsmäßig gleich, dann ist der zuvor beschriebene bestimmungsgemäße Zustand des Mastes festzustellen.

Alternativ oder zusätzlich kann dies auch dadurch erfolgen, dass die Flächen F1 unter der Belastungskurve 16 sowie F2 unter der Entlastungskurve 17 miteinander verglichen werden (Fig. 3). Sind diese Flächen gleich groß, dann handelt es sich um einen bestimmungsgemäß funktionsfähigen Mast einschließlich Verankerung, vorausgesetzt die Belastungs- und Entlastungskurven 16 und 17 verlaufen geradlinig mit konstanter Steigung.

Fig. 4 zeigt einen Kurvenverlauf von einer Belastungskurve 16a und einer Entlastungskurve 17a, bei welcher die Kurven in ihrem Verlauf jeweils eine unterschiedliche Steigung aufweisen. So weist die Belastungskurve 16a zunächst einen steileren Verlauf und nachfolgend einen flacheren Verlauf auf, die Entlastungskurve 17a weist einen zur Achse 15 spiegelbildlichen Verlauf auf, das heißt zunächst einen flacheren und dann einen steileren Verlauf. Dieser Kurvenverlauf ist typisch für eine Rissbildung im Mast, wobei in dem steileren Kurvenverlauf der Riss geschlossen ist und erst in dem flacheren Kurvenverlauf sich der Riss öffnet. Wenn also die Belastungskurve 16a und die Entlastungskurve 17a spiegelbildlich übereinstimmen, jedoch in ihrem Kurvenverlauf jeweils unterschiedliche Steigung aufweisen, dann kann auf eine Rissbildung geschlossen werden. Die Flächen unter den Kurven 16a und 17a sind dabei gleich groß.

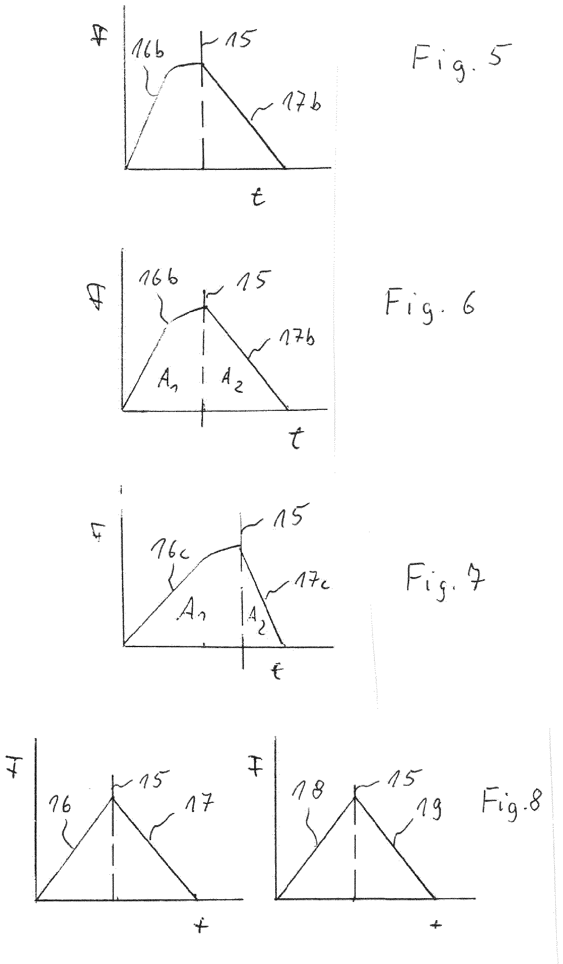

Fig. 5 zeigt einen Kurvenverlauf, bei welchem die Belastungskurve 16b einen nicht linearen Verlauf aufweist, wohingegen die Entlastungskurve 17b linear verläuft. Aufgrund der Nichtlinearität der Kurve 16b kann bei dieser Kurve darauf geschlossen werden, dass sich bei der Belastung entweder der Mast plastisch verformt hat oder aber ein Defekt in der Fundamentierung vorliegt, weil der Mast sich bewegt hat.

Dies kann nicht nur durch Analyse des Kurvenverlaufs der Kurven 16b und 17b ermittelt werden, sondern, wie anhand von Fig. 6 beispielhaft dargestellt ist, durch Vergleich der Flächen unter den Kurven 16b und 17b, nämlich den Flächen A1 und A2. Erkennbar ist, dass diese Flächen bei dem Kurvenverlauf gemäß Fig. 6 ungleich sind, und zwar ist A1 größer als A2. Dieses Merkmal erlaubt den Schluss, dass entweder sich der Mast plastisch verformt oder in der Fundamentierung bewegt hat. Anhand von Fig. 7 ist ein weiterer Kurvenverlauf dargestellt, bei welchem die Fläche A1 unter der Belastungskurve 16c deutlich größer als die Fläche A2 unter der Entlastungskurve 17c ist, deren Flächenvergleich somit denselben Rückschluss erlaubt.

Anhand von Fig. 8 ist eine Weiterbildung des Prüfverfahrens veranschaulicht. Dort erfolgt zunächst eine Belastung des Mastes mit konstanter Geschwindigkeit in Richtung 13, so dass sich eine Belastungskurve 16 ergibt. Nach Umsteuerung erfolgt eine Entlastung mit konstanter Geschwindigkeit, so dass sich die Entlastungskurve 17 ergibt. Die Weiterbildung liegt nun darin, dass nach dieser Belastung des Mastes in Richtung 13 und Entlastung in Richtung 14 eine Belastung mit konstanter Geschwindigkeit in Richtung 14 erfolgt, wodurch sich eine Belastungskurve 18 ergibt und nachfolgend eine Entlastung mit konstanter Geschwindigkeit in Richtung 13, wodurch sich eine Entlastungskurve 19 ergibt. Diese aufeinanderfolgende Prüfung ist besonders günstig, da die Schelle 5 am Mast 1 unverändert bleibt, lediglich der Linearantrieb 4 umgesteuert werden muss. Wenn der Mast bestimmungsgemäß ist, dann ergeben sich lineare und deckungsgleiche Belastungskurven 16 und 18 sowie lineare und deckungsgleiche Entlastungskurven 17 und 19, die zudem jeweils spiegelbildlich zur Achse 15 sind.

Eine solche aufeinanderfolgende Prüfung in zwei entgegengesetzten Richtungen ermöglicht eine weitere Schadensdifferenzierung. So zeigt die Fig. 9 eine Belastungskurve 16d, die nicht linear ist, eine Entlastungskurve 17d, die linear ist und bei der nachfolgenden Prüfung in Gegenrichtung eine Belastungskurve 18d, die nicht linear ist und eine Entlastungskurve 19d die wiederum linear ist. Wie bereits anhand von Fig. 5 erläutert, gibt die Nichtlinearität der Belastungskurve 16d zunächst einmal den Hinweis, dass entweder eine plastische Verformung des Mastes erfolgt ist oder eine Bewegung des Mastes im Fundament. Die nachfolgende Belastungsprüfung in Gegenrichtung, die in Fig. 9 in dem rechten Diagramm dargestellt ist, gibt nun den sicheren Hinweis, dass es sich bei der Nichtlinearität der Belastungskurve 16d um eine Bewegung im Boden handelt, da die Belastungskurve 18d einen anfänglichen nicht linearen Verlauf hat. In diesem anfänglichen nicht linearen Verlauf wird nämlich die durch die erste Belastung entsprechend der Belastungskurve 16d erfolgte Verschiebung im Boden in Gegenrichtung und damit rückgängig gemacht. Hierzu ist keine nennenswerte Kraft erforderlich, wie der flache nicht lineare anfängliche Verlauf der Belastungskurve 18d verdeutlicht.

Ergibt sich hingegen ein Kurvenverlauf, wie er anhand von Fig. 10 dargestellt ist, bei der die Belastungskurve 16e sowie die Entlastungskurve 17e identisch mit den vorbeschriebenen Belastungskurven 16d und 17d übereinstimmen, so verdeutlicht das rechte Diagramm der Fig. 10, bei welchem die Belastung gemäß Belastungskurve 18e in Gegenrichtung und die Entlastung gemäß Entlastungskurve 19e in Belastungsrichtung der Kurve 16e erfolgt, dass es sich hier um eine plastische Verformung des Mastes handelt, da nämlich der anfängliche Kurvenverlauf linear ist und erst im Endbereich, also kurz vor Erreichen der Achse 15 ein nicht linearer Verlauf der Kurve 18e gegeben ist. In diesem Endbereich, in dem die Kurve 18e nicht linear und wie Fig. 10 verdeutlicht vergleichsweise flach ist, wird der bei der Belastung gemäß Kurve 16e verformte Mast in Gegenrichtung rückgeformt. Es handelt sich also in beiden Fällen um plastische Verformungen des Mastes. Die Kurve 18e gibt also einen klaren Hinweis darauf, dass der Mast plastisch verformt worden ist und nicht im Fundament bewegt worden ist.

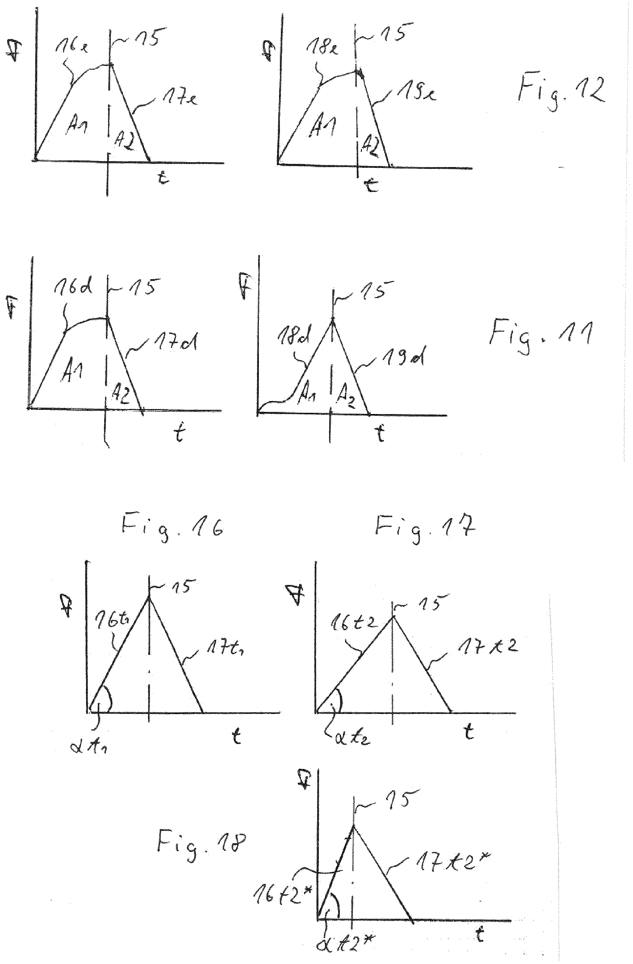

Wie die Fig. 11 und 12 verdeutlichen, die im Kurvenverlauf den Fig. 9 und 10 entsprechen, kann die grundsätzliche Schadensermittlung auch hier wiederum durch Bestimmung der Flächen unter den Kurven 16d bzw. 17d bzw. 16e und 17e erfolgen. Sind die Flächen A1 unter den Belastungskurven 16d bzw. 16e größer als die Flächen A2 unter den Entlastungskurven 17d bzw. 17e, dann ist dies ein Kennzeichen für einen Defekt im Mast oder in dessen Verankerung. Durch die Betrachtung der Belastungskurven 18d bzw. 18e bei der Prüfung in Gegenrichtung erfolgt dann eine Schadensdifferenzierung, wie anhand der Fig. 9 und 10 bereits beschrieben worden ist.

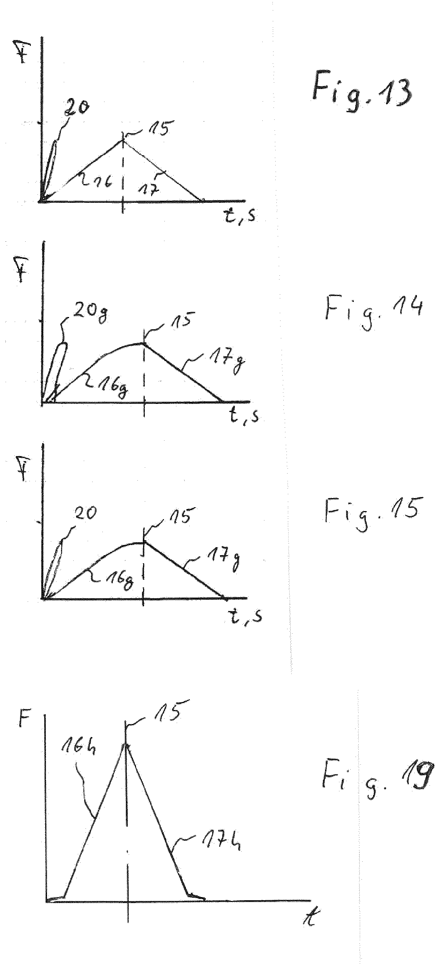

Wenn bei der anhand von Fig. 1 dargestellten Prüfanordnung nicht nur ein Kraftaufnehmer/Kraftsensor 7 sondern zusätzlich noch ein Wegaufnehmer 11 vorgesehen sind und der Wegaufnehmer bevorzugt im Bereich unter der Mastklappe 130 angeordnet ist, dann kann eine weitere Differenzierung hinsichtlich der räumlichen Anordnung des Schadens stattfinden. Fig. 13 zeigt die durch eine solche Auswertung erhaltenen Kurven, die dort vereinfacht in einem gemeinsamen Diagramm dargestellt sind. Es versteht sich jedoch, dass mit dem Kraftaufnehmer 7 die Kraft in Abhängigkeit der Zeit erfasst ist, sich also ein F/t-Diagramm entsprechend den vorbeschriebenen Diagrammen ergibt und dass mit dem Wegaufnehmer der Weg, also die Auslenkung des Mastes, erfasst wird, der allerdings in Abhängigkeit der aufgebrachten Kraft gesetzt wird. Es ergibt sich also ein Kraft/Weg-Diagramm, wie dies auch bei Mastprüfverfahren nach dem Stand der Technik erfolgt. Diese sind lediglich vereinfacht in einem Diagramm in den Fig. 13 bis 15 dargestellt, um dies zusammenhängend zu zeigen.

In Fig. 13 ist der Mast bestimmungsgemäß, das heißt die Belastungskurve 16 verläuft bis zur Achse 15 linear, die Entlastungskurve 17 ist spiegelbildlich dazu, so wie dies anhand der Fig. 2 und 3 beispielhaft schon beschrieben worden ist. Die unter Einsatz des Wegaufnehmers 11 in Verbindung mit dem Kraftsensor 7 aufgenommene Kurve 20 entspricht ebenfalls der eines bestimmungsgemäßen Mastes, bei welchem nach Entlastung die Auslenkung, das heißt der Weg s wieder auf null zurückgeht.

Bei den anhand von Fig. 14 dargestellten Kurven zeigt die Belastungskurve 16g einen anfänglichen linearen und dann nicht linearen Verlauf, wohingegen die Entlastungskurve 17g linear verläuft. Dies entspricht einem Kurvenverlauf, wie er anhand der Fig. 5 und 6 erläutert worden ist, so dass aufgrund der Nichtlinearität der Kurve 16g darauf geschlossen werden kann, dass sich bei der Belastung entweder der Mast plastisch verformt hat oder aber ein Defekt in der Fundamentierung vorliegt, weil sich der Mast bewegt hat. Da dort das Kraft/Weg-Diagramm, das heißt die Kurve 20g nicht auf null zurückgeht, sondern einen Versatz im Weg aufweist, kann zuverlässig darauf geschlossen werden, dass der Fehler im Bereich unterhalb des Wegaufnehmers liegt, wobei grundsätzlich nun noch zu differenzieren wäre, ob der Fehler im Mast selbst oder in seiner Fundamentierung liegt. Dies kann nach den vorbeschriebenen Verfahren erfolgen.

Bei dem gemäß Fig. 15 vorliegenden Prüfergebnis stimmen die Kraft--/Zeit-Kurven 16g und 17g mit denen gemäß Fig. 14 überein, allerdings weist das Kraft/Weg-Diagramm 20 eine bestimmungsgemäße Form auf, wie dies in Fig. 13 der Fall ist, das heißt bei dem der Weg wieder auf null zurückgeht. Da das über den Wegaufnehmer 11 ermittelte Ergebnis auf einen bestimmungsgemäßen Mast und eine bestimmungsgemäße Fundamentierung schließen lässt, erlaubt der Vergleich der Kurven 16g und 17g bzw. die ersichtliche im Endbereich gegebene Nichtlinearität der Kurve 16g darauf zu schließen, dass der Mast selbst einen Defekt hat, und zwar im Bereich zwischen dem Kraftsensor 7 und dem Wegaufnehmer 11.

Mit dem erfindungsgemäßen Verfahren können nicht nur die Standsicherheit und Festigkeit eines Mastes überprüft werden, sondern es kann durch Wiederholen in zeitlichen Abständen und bei Vergleich der Ergebnisse ermittelt werden, wie sich das Festigkeitsverhalten des Mastes zukünftig ändern wird. Wenn beispielsweise bei der ersten Prüfung eines Mastes ein Kraft/Zeit-Diagramm gemäß Fig. 16 erfasst wird, bei welchem eine bestimmungsgemäße Funktion des Mastes festgestellt wird, da die Belastungskurve 16 mit der Entlastungskurve 17 an der Achse 15 gespiegelt übereinstimmt, dann kann man, wenn man beispielsweise nach einem Jahr diese Messung unter gleichen Messbedingungen wiederholt zwar wiederum ein Ergebnis bekommen, wie dies anhand der Fig. 17 oder alternativ 18 dargestellt ist, bei dem sowohl der Mast als auch seine Fundamentierung bestimmungsgemäß sind. Allerdings kann man aus dem Vergleich der Kurven 16t1 der Fig. 16 und der Kurve 16t2 der Fig. 17 feststellen, dass die Steigung flacher geworden ist, oder gemäß Fig. 18 bei Vergleich mit der Kurve 16t2* dass die Kurve steiler geworden ist. So deutet eine flacher werdende Kurve, das heißt wenn der Winkel at1 größer als der Winkel at2 ist darauf hin, dass das System/Mast/Fundament "weicher" geworden ist. Umgekehrt deutet ein größer werdender Winkel, wie es anhand von Fig. 18 beim Winkel at2* zu sehen ist, darauf hin, dass das System "steifer" geworden ist. Wenn man diese Messungen im beispielsweise jährlichen Abstand wiederholt und die sich dabei ergebenden Winkel a über der Zeit aufzeichnet, so kann mit üblichen statistischen/mathematischen Methoden bestimmt werden, wie sich das Festigkeitsverhalten des Mastes und seiner Fundamentierung zukünftig ändern werden.

Dies kann in analoger Weise auch dann erfolgen, wenn ein Fehler, das heißt eine plastische Verformung im Mast oder seiner Fundamentierung festgestellt worden ist. Auch dieser vergrößert sich typischerweise im Laufe der Zeit, wobei die Geschwindigkeit dieser Vergrößerung ein Maß für die zu erwartende sichere Lebensdauer des Mastes ist.

Schließlich ist anhand von Fig. 19 noch eine Besonderheit im Prüfverfahren dargestellt. Diese Besonderheit kann bei Masten auftreten, die nicht unmittelbar im Fundament verankert sind, sondern die typischerweise als Schweißkonstruktion eine Bodenplatte aufweisen, die ihrerseits über Schrauben mit dem Fundament, sei es direkt oder über eine Gegenplatte befestigt sind. Die anhand von Fig. 19 dargestellten Belastungskurven 16h und Entlastungskurven 17h zeigen einen, bei solchen Masten typischerweise auftretenden Defekt, wenn die Schraubverbindungen, aus welchen Gründen auch immer, sich teilweise gelöst haben. So weist die Kurve 16h einen anfänglichen sehr flachen Abschnitt auf, der gegenüber dem übrigen Kurvenverlauf um mindestens den Faktor 2 flacher ist. Die Entlastungskurve 17h weist in ihrem Endbereich einen sehr flachen Abschnitt auf, der gegenüber dem übrigen Kurvenverlauf um mindestens den Faktor 2 flacher ist. Dieser anfängliche flache Abschnitt entsteht, wenn der Mast bei Belastung zunächst plötzlich fast kraftfrei kippt und dann dem Linearantrieb der Prüfvorrichtung plötzlich einen Widerstand entgegen bringt. Entsprechend ist die Entlastungskurve 17h in ihrem ersten Teil steiler, um dann am Ende in einen flachen Teil überzugehen, der sich ergibt, wenn der Mast dann quasi kraftfrei in die Gegenrichtung kippt. Unter Umständen kann es vorkommen, dass der anfängliche flache Bereich der Belastungskurve nicht ausreichend charakteristisch ausgebildet ist, wenn nämlich der Mast beispielsweise aufgrund einer Windlast sich schon in dieser gekippten Stellung befindet. In jedem Falle wird dann jedoch die Entlastungskurve die vorbeschriebenen Charakteristika aufweisen. Auch wird die Belastungskurve diese Charakteristika in ausreichend ausgeprägter Form aufweisen, wenn die Belastung erneut aufgebracht wird, das heißt eine zweite Belastungskurve gefahren wird.

### Bezugszeichenliste

- 1: Mast
- 2: Raupenfahrzeug
- 3: Ausleger
- 4: Linearantrieb
- 5: Schelle
- 6: Doppelpfeil
- 7: Kraftsensor
- 8: Doppelpfeile
- 9: Registrier-Anzeige- und Auswerteinrichtung
- 10: Boden
- 11: Wegaufnehmer
- 12: Stativ
- 13: Richtung
- 14: Gegenrichtung
- 15: Mittelachse
- 16: Belastungskurven (16a, 16b, ...)
- 17: Entlastungskurven (17a, 17b, ...)
- 18: Belastungskurve (18d, 18e, ...)
- 19: Entlastungskurve (19d, 19e, ...)
- 20: Kraft/Weg-Kurve
- 130: Mastklappe
- α: Winkel unter der Kurve zur Zeitachse
- β: Winkel unter der Kurve zur Zeitachse

## Patentansprüche

1. Verfahren zur Festigkeitsprüfung von bodenseitig verankerten Masten, bei dem der Mast (1) oberhalb seiner Verankerungsstelle mit einer konstanten Geschwindigkeit in einer Querrichtung (13) zu seiner Längsachse ausgelenkt und dabei die Kraft in Abhängigkeit der Zeit registriert und zur Auswertung der Festigkeit des Mastes herangezogen wird, **dadurch gekennzeichnet, dass** der Mast bei der Entlastung mit konstanter Geschwindigkeit in Gegenrichtung (14) rückgelenkt wird und dabei die Kraft in Abhängigkeit der Zeit registriert wird, wobei ein Vergleich der Belastungskräfte mit den Entlastungskräften jeweils in Abhängigkeit der Zeit zur Auswertung der Festigkeit des Mastes herangezogen wird.

2. Verfahren nach Anspruch 1, **dadurch gekennzeichnet, dass** der Kurvenverlauf (16) der Belastungskräfte mit dem Kurvenverlauf (17) der Entlastungskräfte verglichen und zur Auswertung herangezogen wird.

3. Verfahren nach Anspruch 1 oder 2, **dadurch gekennzeichnet, dass** die Flächen unter den Kurvenverläufen der Belastungskräfte und der Entlastungskräfte verglichen und zur Auswertung herangezogen werden.

4. Verfahren nach einem der vorhergehenden Ansprüche, **dadurch gekennzeichnet, dass** lineare Kurvenverläufe der Belastung und der Entlastung verglichen werden und dass bei Ermittlung von jeweils zwei spiegelbildlich übereinstimmenden Kurvenverläufen unterschiedlicher Steigung auf eine Rissbildung geschlossen wird.

5. Verfahren nach einem der vorhergehenden Ansprüche, **dadurch gekennzeichnet, dass** bei nicht linearen Kurvenverläufen auf eine plastische Verformung des Mastes oder eine Bewegung des Mastes im Boden geschlossen wird.

6. Verfahren nach einem der vorhergehenden Ansprüche, **dadurch gekennzeichnet, dass** dann, wenn die Flächen unter den Kurvenverläufen von Belastung und Entlastung unterschiedlich groß sind, auf eine plastische Verformung des Mastes oder eine Bewegung des Mastes im Boden geschlossen wird.

7. Verfahren nach einem der vorhergehenden Ansprüche, **dadurch gekennzeichnet, dass** nach erfolgter Belastung des Mastes in der Querrichtung und Entlastung des Mastes in Gegenrichtung eine Belastung des Mastes mit konstanter Geschwindigkeit in Gegenrichtung und nachfolgend eine Entlastung des Mastes mit konstanter Geschwindigkeit in die Querrichtung erfolgt, wobei die Kraft in Abhängigkeit der Zeit registriert wird.

8. Verfahren nach Anspruch 7, **dadurch gekennzeichnet, dass** durch Vergleich der Belastungskurvenverläufe ermittelt wird, ob es sich um eine plastische Verformung des Mastes oder um eine Bewegung des Mastes im Boden handelt.

9. Verfahren nach Anspruch 7 oder 8, **dadurch gekennzeichnet, dass** bei einem anfänglichen nichtlinearen Kurvenverlauf der Belastungskurve in Gegenrichtung auf eine Bewegung des Mastes im Boden geschlossen wird.

10. Verfahren nach einem der Ansprüche 7 bis 9, **dadurch gekennzeichnet, dass** bei einem anfänglichen linearen Kurvenverlauf der Belastungskurve in Gegenrichtung auf eine Verformung des Mastes geschlossen wird.

11. Verfahren nach einem der vorhergehenden Ansprüche, **dadurch gekennzeichnet, dass** die Flächen unter den Kurvenverläufen jeweils von Belastung und Entlastung verglichen werden und dass dann wenn die Flächen unter den Belastungskurven größer als die entsprechenden Flächen unter den Entlastungskurven sind und die Belastungskurven zumindest in ihren anfänglichen Bereichen nichtlinear verlaufen, auf eine Bewegung des Mastes im Boden geschlossen wird.

12. Verfahren nach einem der vorhergehenden Ansprüche, **dadurch gekennzeichnet, dass** die Flächen unter den Kurvenverläufen jeweils von Belastung und Entlastung verglichen werden und dass dann wenn die Flächen unter den Belastungskurven größer als die entsprechenden Flächen unter den Entlastungskurven sind und die Belastungskurven zumindest in ihren anfänglichen Bereichen linear verlaufen, auf eine plastische Verformung des Mastes geschlossen wird.

13. Verfahren nach einem der vorhergehenden Ansprüche, **dadurch gekennzeichnet, dass** das Verfahren in zeitlichen Abständen mit gleichen Belastungs- und Entlastungsgeschwindigkeiten wiederholt wird und die Veränderung der Steigung der Belastungskurve und/oder der Entlastungskurve vorzugsweise im Nullpunkt als Maß für Lebensdauer des Mastes/der Verankerung des Mastes, insbesondere der Fortschreitung eines Risses dient.

14. Verfahren nach einem der vorhergehenden Ansprüche, **dadurch gekennzeichnet, dass** das Verfahren in zeitlichen Abständen mit gleichen Belastungs- und Entlastungsgeschwindigkeiten wiederholt wird, die sich dabei ergebenden Belastungs- und/oder Entlastungskurven verglichen werden und anhand der Veränderungen die zu erwartende Lebensdauer des Mastes und/oder seiner Verankerung bestimmt wird.

15. Verfahren nach einem der vorhergehenden Ansprüche, **dadurch gekennzeichnet, dass** im Bereich zwischen Boden und Krafteinleitungsstelle, vorzugsweise unterhalb einer Mastklappe (130) ein Wegaufnehmer (11) angeordnet wird, mit dem die Auslenkung des Mastes in Belastungs- und in Gegenrichtung gleichzeitig erfasst wird und dass durch Auswertung der sich ergebenden Kraft/Zeit-Kurve mit der Kraft/Weg-Kurve der Ort einer etwaigen Schadensstelle am Mast oder seiner Verankerung eingegrenzt wird, insbesondere durch Varianz der höhenmäßigen Anordnung des Wegaufnehmers.

16. Verfahren nach einem der vorhergehenden Ansprüche, bei dem der Mast mit einer Platte verbunden ist, die an einem Fundament mit Schrauben befestigt ist, **dadurch gekennzeichnet, dass** bei Ermittlung eines anfänglichen flachen Kurvenabschnitts der Belastungs- und/oder eines flachen Kurvenabschnitts am Ende der Entlastungskurve auf ein Spiel der Schraubbefestigung zwischen Fundament und Platte geschlossen wird.

## Claims

1. A method for testing the strength of masts which are anchored at the ground, with which the mast is deflected above its anchoring location, in a transverse direction to its longitudinal axis at a constant speed, and the force is thereby registered in dependence on time and is used for evaluating the strength of the mast, **characterised in that** the mast is deflected back in the counter direction at a constant speed when being unloaded and the force is thereby registered in dependence on time, wherein a comparison of the loading forces with the unloading forces in each case in dependence on time is used for evaluating the strength of the mast.

2. A method according to claim 1, **characterised in that** the course of the curve of the loading forces is compared to the course of the curve of the unloading forces and is used for evaluation.

3. A method according to claim 1 or 2, **characterised in that** the areas below the curve courses of the loading forces and of the unloading forces are compared and used for evaluation.

4. A method according to one of the preceding claims, **characterised in that** linear curve courses of the loading and of the unloading are compared and that a fracture formation is concluded given the determining of in each case two curve courses of a different gradient which mirror-symmetrically correspond to one another.

5. A method according to one of the preceding claims, **characterised in that** a plastic deformation of the mast or a movement of the mast in the ground is concluded given a non-linear curve courses.

6. A method according to one of the preceding claims, **characterised in that** a plastic deformation of the mast or a movement of the mast in the ground is concluded if the areas below the curve courses of the loading and unloading are differently large.

7. A method according to one of the preceding claims, **characterised in that** after the effected loading of the mast in the transverse direction and unloading of the mast in the counter direction, a loading of the mast with a constant speed is effected in the counter direction and subsequently an unloading of the mast with a constant speed is effected in the transverse direction, wherein the force in dependence on time is registered.

8. A method according to claim 7, **characterised in that** it is determined by way of comparing the loading curve courses, as to whether it is the case of a plastic deformation of the mast or of a movement of the mast in the ground.

9. A method according to claim 7 or 8, **characterised in that** a movement of the mast in the ground is concluded given an initial non-linear curve course of the loading curve in the counter direction.

10. A method according to one of the claims 7 to 9, **characterised in that** a deformation of the mast is concluded given an initial linear curve curse of the loading curve in the counter direction.

11. A method according to one of the preceding claims, **characterised in that** the areas below the curve courses in each case of the loading and unloading are compared, and that a movement of the mast in the ground is concluded if the areas below the loading curves are larger than the corresponding areas below the unloading curves and the loading curves run in a non-linear manner at least in their initial regions.

12. A method according to one of the preceding claims, **characterised in that** the areas below the curve courses in each case of the loading and unloading are compared, and a plastic deformation of the mast is concluded if the areas below the loading curves are larger than the corresponding areas below the unloading curves, and the loading curves run linearly at least in their initial regions.

13. A method according to one of the preceding claims, **characterised in that** the method is repeated in temporal intervals with the same loading speeds and unloading speeds and the change of the gradient of the loading curve and/or of the unloading curve preferably at the origin serves as a measure for the service life of the mast / of the anchoring of the mast, in particular of the propagation of a fracture.

14. A method according to one of the preceding claims, **characterised in that** the method is repeated in temporal intervals with the same loading and unloading speeds, and the loading and/or unloading curves which thereby result are compared and the expected service life of the mast and/or of its anchoring is determined by way of the changes.

15. A method according to one of the preceding claims, **characterised in that** a displacement sensor, with which the deflection of the mast in the loading direction and counter direction is simultaneously detected is arranged in the region between the ground and the force introduction location, preferably below a mast opening cover, and that the location of any damage location on the mast or its anchoring is localised by way of evaluating the resulting force/time curve with the force/displacement curve, in particular by way of the variance of the arrangement of the displacement sensor with regard to height.

16. A method according to one of the preceding claims, with which the mast is connected to a plate which is fastened on a foundation by screws, **characterised in that** a play of the screw fastening between the foundation and the plate is concluded given the determining of an initially flat curve section of the loading curve and/or of a flat curve section at the end of the unloading curve.

## Revendications

1. Procédé de contrôle de résistance de mâts ancrés au sol, dans lequel le mât (1) est dévié au-dessus de l'ancrage à une vitesse constante dans une direction transversale (13) par rapport à son axe longitudinal et, en même temps, l'effort en fonction du temps est enregistré et utilisé pour déterminer la résistance du mât, **caractérisé en ce que**, lors de la décharge, le mât est dévié à une vitesse constante dans la direction inverse (14) et, en même temps, l'effort en fonction du temps est enregistré, une comparaison des efforts de charge avec les efforts de décharge, chacun en fonction du temps, étant utilisée pour déterminer la résistance du mât.

2. Procédé selon la revendication 1, **caractérisé en ce que** la forme de la courbe (16) des efforts de charge est comparée à la forme de la courbe (17) des efforts de décharge et est utilisée pour ladite détermination.

3. Procédé selon la revendication 1 ou 2, **caractérisé en ce que** les aires sous les tracés de courbe des efforts de charge et des efforts de décharge sont comparées et utilisés pour ladite détermination.

4. Procédé selon l'une des revendications précédentes, **caractérisé en ce que** des tracés linéaires de courbes de charge et de décharge sont comparés et **en ce que**, lorsque l'on trouve deux tracés de courbe respectifs symétriques de pentes différentes, on en conclut qu'une fissure s'est formée.

5. Procédé selon l'une des revendications précédentes, **caractérisé en ce que**, en cas de tracés de courbe non linéaires, on conclut qu'il y a une déformation plastique du mât ou un mouvement du mât dans le sol.

6. Procédé selon l'une des revendications précédentes, **caractérisé en ce que**, lorsque les aires sous des tracés de courbe de charge et de décharge ont des tailles différentes, on conclut qu'il y a une déformation plastique du mât ou un mouvement du mât dans le sol.

7. Procédé selon l'une des revendications précédentes, **caractérisé en ce que**, après une charge du mât dans la direction transversale et une décharge du mât dans la direction inverse, il est procédé à une charge à vitesse constante dans la direction inverse et ensuite à une décharge à vitesse constante dans la direction transversale, l'effort étant enregistré en fonction du temps.

8. Procédé selon la revendication 7, **caractérisé en ce qu'**il est déterminé par la comparaison des formes de courbe de charge, s'il s'agit d'une déformation plastique du mât ou d'un mouvement du mât dans le sol.

9. Procédé selon la revendication 7 ou 8, **caractérisé en ce que**, dans le cas d'un tracé de courbe non linéaire au début, de la courbe de charge dans la direction inverse, on conclut qu'il y a un mouvement du mât dans le sol.

10. Procédé selon l'une des revendications 7 à 9, **caractérisé en ce que**, dans le cas d'un tracé de courbe linéaire au début, de la courbe de charge dans la direction inverse, on conclut qu'il y a une déformation du mât.

11. Procédé selon l'une des revendications précédentes, **caractérisé en ce que** les aires sous des tracés de courbe en charge et en décharge sont comparés et **en ce que**, lorsque les aires sous les courbes de charge sont plus grands que les aires correspondants sous les courbes de décharge et les courbes de charge ont, au moins dans leurs zones de début, un tracé non linéaire, on conclut qu'il y a un mouvement du mât dans le sol.

12. Procédé selon l'une des revendications précédentes, **caractérisé en ce que** les aires sous des tracés de courbe respectivement en charge et en décharge sont comparés et **en ce que**, lorsque les aires sous les courbes de charge sont plus grandes que les aires correspondantes sous les courbes de décharge et les courbes de charge ont, au moins dans leurs zones de début, un tracé linéaire, on conclut qu'il y a une déformation plastique du mât.

13. Procédé selon l'une des revendications précédentes, **caractérisé en ce que** le procédé est répété dans des intervalles de temps avec les mêmes vitesses de charge et de décharge et **en ce que** le changement de la pente de la courbe de charge et/ou de la courbe de décharge, considéré de préférence au point zéro, est pris comme mesure de la durée de vie du mât / de l'ancrage du mât, notamment de l'évolution d'une fissure.

14. Procédé selon l'une des revendications précédentes, **caractérisé en ce que** le procédé est répété dans des intervalles de temps avec les mêmes vitesses de charge et de décharge, **en ce que** les courbes de charge et/ou de décharge qui en résultent, sont comparées et **en ce que** la durée de vie entendrée du mât / de son ancrage est déterminée sur la base des changements.

15. Procédé selon l'une des revendications précédentes, **caractérisé en ce que**, dans la zone entre le sol et l'endroit d'application d'un effort, de préférence en-dessous d'un clapet de mât (130), un capteur de déplacement (11) est disposé à l'aide duquel la déviation du mât dans la direction du charge et dans la direction inverse est capté simultanément et **en ce que** l'emplacement d'un défaut éventuel sur le mât ou sur son ancrage est délimité par exploitation de la courbe effort sur temps avec la courbe effort sur déplacement, notamment par une variation de la disposition en hauteur du capteur de déplacement.

16. Procédé selon l'une des revendications précédentes, dans lequel le mât est attaché à une plaque qui est fixée avec des vis sur une fondation, **caractérisé en ce que**, lorsque l'on constate un segment de courbe plat au début de la courbe de charge et/ou à la fin de la courbe de décharge, on conclut que la fixation par vissage entre la fondation et la plaque présente un jeu.
